(19)

**Europäisches Patentamt**
**European Patent Office**
**Office européen des brevets**

(11)  **EP 4 761 079 A1**

(12)  # EUROPEAN PATENT APPLICATION

(43) Date of publication:
**17.06.2026   Bulletin 2026/25**

(21) Application number: **24219446.2**

(22) Date of filing: **12.12.2024**

(51) International Patent Classification (IPC):
**H02M 1/00** $^{(2006.01)}$          **H02M 1/12** $^{(2006.01)}$
**H02M 3/00** $^{(2006.01)}$          **H02M 3/335** $^{(2006.01)}$

(52) Cooperative Patent Classification (CPC):
**H02M 1/0058; H02M 1/123; H02M 3/01;**
**H02M 3/33561; H02M 3/33573; H02M 3/33584**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **ABB Schweiz AG**
**5400 Baden (CH)**

(72) Inventors:
• **BOEHLER, Julian**
  **8006 Zürich (CH)**
• **PETTERSSON, Sami**
  **8953 Dietikon (CH)**
• **CANALES, Francisco**
  **5405 Baden-Dättwil (CH)**

(74) Representative: **Sykora & König Patentanwälte**
**PartG mbB**
**Maximilianstraße 2**
**80539 München (DE)**

(54)  **METHOD, CONTROLLER, AND COMPUTER PROGRAM FOR OPERATING A THREE-PORT SERIES RESONANCE CONVERTER, CONVERTER ARRANGEMENT, AND COMPUTER-READABLE MEDIUM**

(57)      A method for operating a three-port series resonance converter (20) is described. The three-port series resonance converter (20) has a main feeding bridge (22), at least one auxiliary feeding bridge (24), and an output bridge (26). The main feeding bridge (22) is electro-magnetically coupled to the output bridge (26) via a first input coil (36) of the main feeding bridge (22), and the auxiliary feeding bridge (24) is electro-magnetically coupled to the output bridge (26) via a second input coil (46) of the auxiliary feeding bridge (24). The method comprises: sending one or more control signals to one or more switches (32, 42) of the feeding bridges (22, 24) based on a predetermined control scheme such that input voltages ($V_{LV,m}$, $V_{LV,a}$) applied to the feeding bridges (22, 24) are transformed to an overall output voltage ($V_{MV}$) to be provided by the output bridge (26); and delaying a turn on signal for activating one of the feeding bridges (22, 24) such that transformer currents ($i'_{p,m}$, $i'_{p,a}$) of the feeding bridges (22, 24) reach at least approximately zero at least approximately at the same time.

**Fig. 1**

**(Cont. next page)**

EP 4 761 079 A1

# Fig. 6

**Description**

FIELD OF THE INVENTION

The invention relates to the field of electrical converters and to the control of electrical converters. In particular, the invention relates to a method, a controller and, a computer program for controlling a three-port series resonance converter, to a converter arrangement comprising the controller and the three-port series resonance converter, and to a computer-readable medium, on which the computer program is stored.

BACKGROUND OF THE INVENTION

In general, electrical converters are used for converting an input voltage to an output voltage, e.g., from a Low Voltage (LV) to a Medium Voltage (MV) or vice versa. The LV region as used in this description may range from 120 V to 1500 V, and the MV region may refer to voltages larger than 1500 V. One known class of electrical converters is represented by resonance converters, such as e.g., a two-port or three-port Series Resonance Converters (SRC).

A two-port SRC has an input bridge and an output bridge coupled to each other by a transformer. A three-port SRC has a main input bridge, an auxiliary input bridge, and an output bridge, wherein each of the input bridges is coupled to the output bridge by a transformer. The two-port as well as the three-port SRC can be operated in two directions, such that in a first operating mode the input voltage is provided to the input bridges and the output voltage is provided by the output bridge and in a second operating mode the input voltage is provided to the output bridge and the output voltage is provided by the input bridges.

One of the advantages of a two-port SRC is that it offers an operating mode called "Half-Cycle Discontinuous Conduction Mode (HC-DCM)", for which the two-port SRC inherently guarantees soft- switching over the entire operating range while also allowing a very simple open-loop control implementation. In this operating mode, only a feeding bridge of the two-port SRC is actively switched while an output bridge of the two-port SRC is operated as a passive diode rectifier.

The straightforward approach to operate the three-port SRC converter with two feeding bridges would be to also apply the same modulation scheme typically used for the conventional two-port SRC, i.e., actively switching both feeding bridges on the LV side with fixed frequency and full duty cycle based on the corresponding control scheme while the output side bridge on the MV side is operating as a passive diode rectifier. In particular, for a power flow from the MV to the two LV side feeding bridges this can be trivially achieved by applying the same modulation strategy as in case of the two-port SRC. However, in case of a power flow from the two LV feeding bridges to the MV output bridge, the modulation approach used in conventional two-port SRCs leads to circulating currents between two power flow paths, resulting in a loss of soft-switching and reduced power flow controllability, except for some exceptional loading scenarios.

As long as resonance frequencies of the feeding bridges are at least approximately the same, a method for controlling a three-port SRC as described in the not yet published patent application EP 24 217 330.0 may be used. However, the resonance frequencies of the feeding bridges may vary, e.g., due to tolerances of the involved components, and/or may deviate from each other. This deviation in resonance frequencies may again lead to circulating currents between the two feeding bridges, resulting in a loss of zero-current switching of at least one of the bridges

DESCRIPTION OF THE INVENTION

It is an objective of the present invention to provide a method, a controller, and a computer program for controlling a three-port SRC, which enable to use the HC-DCM operation for the three-port SRC, in particular if the power flows from the LV feeding bridges towards the MV output bridge, and/or to enable to maintain zero-current switching for the active bridges, preferably over the entire operating range, and to control a ratio of the power flows between the feeding bridges, in particular when the resonance frequencies of the feeding bridges are not the same. It is another object of the present invention, to provide a converter arrangement having the controller and the three-port SRC, and a computer-readable medium on which the computer program is stored.

These objectives are achieved by the subject-matter of the independent claims. Further exemplary embodiments are evident from the dependent claims and the following description.

A first aspect relates to a method for operating a three-port series resonance converter. The three-port series resonance converter has a main feeding bridge, at least one auxiliary feeding bridge, and an output bridge. The main feeding bridge is electro-magnetically coupled to the output bridge via a first input coil of the main feeding bridge, and the auxiliary feeding bridge is electro-magnetically coupled to the output bridge via a second input coil of the auxiliary feeding bridge. The method comprises: sending one or more control signals to one or more switches of the feeding bridges based on a predetermined control scheme such that input voltages applied to the feeding bridges are transformed to an overall output voltage to be provided by the output bridge; and delaying a turn on signal for activating one of the feeding bridges such that transformer currents of the feeding bridges reach at least approximately zero at least approximately at the same time.

A second aspect relates to a controller for operating the three-port series resonance converter. The controller has a memory for storing one or more voltage values and/or current values; and a processor being communicatively coupled to the memory and being configured to carry out the method as introduced above and described in the following based on the stored voltage values and/or, respectively, current values.

A third aspect relates to the converter arrangement. The converter arrangement has the three-port SRC, and the controller being communicatively coupled to the three-port SRC and being configured for operating the three-port SRC.

A fourth aspect relates to a computer program for operating the three-port SRC, wherein the computer program has computer-readable instructions which, when being executed by the processor of the controller carry out the method as introduced above and described in the following.

A fifth aspect relates to a computer-readable medium on which the computer program is stored. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

The method for operating the three-port SRC represents a new control strategy for the three-port SRC operated with at least two feeding input ports, i.e., the main feeding bridge and the auxiliary feeding bridge. This new method enables to establish a Half-Cycle Discontinuous Conduction Mode (HC-DCM) operation of the three-port SRC similar to a two-port SRC. The proposed method uses a freewheeling state of the feeding bridges to suppress circulating currents between the two feeding ports, which would form between the two feeding bridges if the port power differs from a specific ratio defined by circuit resonance elements of the three-port SRC. To establish an at least approximately simultaneous zero crossing of transformer currents of both feeding bridges the turn-on of one of the feeding bridges is delayed. In other words, by applying different turn-on times for the feeding bridges because of the delay, both transformer currents can be synchronized to reach their zero-crossing at the same time. With the proposed solution, soft-switching operation of the three-port SRC can be guaranteed while maintaining a simple power flow controllability similar to an operating behaviour of a conventional single- or two-port series resonance converter.

That the transformer currents of the feeding bridges reach at least approximately zero at least approximately at the same time may mean in this context that the transformer currents of the feeding bridges reach at least approximately zero at least approximately at the same time at an end of an active interval of the feeding bridges. In this context, the active interval may be initiated and/or started by sending the one or more control signals.

That the transformer currents reach "at least approximately zero" may mean that the transformer currents are zero or that a deviation of the transformer currents from zero is smaller than 20%, e.g., smaller than 5%, e.g., smaller than 0.1%, of a maximal transformer current of the feeding bridges.

That the transformer currents reach at least approximately zero "at least approximately at the same time" may mean in this context that the transformer currents reach zero at the same time or that a duration between the first one of the transformer currents reaching at least approximately zero and the second one of the transformer currents reaching at least approximately zero is smaller than 20%, e.g., smaller than 5%, e.g., smaller than 0.1%, of a duration of the active interval of one of the feeding bridges.

The main feeding bridge and/or the auxiliary feeding bridge each may be full-bridges having four switches, or half-bridges having two switches. Optionally, the three-port SRC may have two or more auxiliary feeding bridges. The output bridge may be used for an active rectification of the output bridge current.

The electro-magnetic coupling of the main feeding bridge to the output bridge via the first input coil and the electro-magnetic coupling of the auxiliary feeding bridge to the output bridge via the second input coil may be realized by the three-port SRC having one single transformer. This single transformer may have one single output coil being electrically coupled with the output bridge and being inductively coupled with the first input coil and with the second input coil. Alternatively, the three-port SRC may have one transformer for each of the feeding bridges. In this case, a first output coil of a first transformer of the three-port series resonance converter may be electrically coupled with the output bridge and electro-magnetically coupled with the first input coil, and a second output coil of a second transformer of the three-port series resonance converter may be electrically coupled with the output bridge and electro-magnetically coupled with the second input coil of the auxiliary feeding bridge.

According to an embodiment, the method comprises: determining a delay time which is needed for delaying the turn on signal such that transformer currents of the feeding bridges are at least approximately zero at least approximately at the same time, wherein the turn on signal is delayed for the determined delay time. Determining the delay time and delaying the turn on signal accordingly may contribute to that the transformer currents are very precisely zero and/or very precisely at the same time.

According to an embodiment, the method comprises determining the resonance frequencies $f_{res,m}$, $f_{res,a}$ of the feeding bridges and determining the delay time from the determined resonance frequencies $f_{res,m}$, $f_{res,a}$. *(claim 3)* This may contribute to easily and precisely determining the delay time.

According to an embodiment, the delay time is determined by

$$\Delta t = \left| \frac{1}{2f_{res,m}} - \frac{1}{2f_{res,a}} \right|$$

According to an embodiment, the turn on signal of the feeding bridge which has the higher resonance frequency $f_{res,m}$, $f_{res,a}$ is delayed for the delay time. So, the feeding bridge which is connected to the resonance tank featuring the higher resonance frequency and therefore faster reaching its zero-crossing is delayed.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows an electric circuit diagram of an exemplary embodiment of a three-port SRC;
Fig. 2 shows an equivalent circuit diagram of the three-port SRC of figure 1;
Fig. 3 shows examples of transformer currents of feeding bridges of the three-port SRC according to figures 1 and 2, without delaying a turn on signal for turning on the corresponding feeding bridge;
Fig. 4 shows examples of voltage and current measurements measured at the three-port SRC of figure 1, without delaying the turn on signal for the corresponding feeding bridge;
Fig. 5 shows examples of transformer currents of feeding bridges of the three-port SRC according to figures 1 and 2, with delaying the turn on signal for turning on the corresponding feeding bridge;
Fig. 6 shows examples of voltage and current measurements measured at the three-port SRC of figure 1, with delaying the turn on signal for the corresponding feeding bridge; and
Fig. 7 shows a flow diagram of an exemplary embodiment of a method for controlling the three-port SRC of figure 1.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

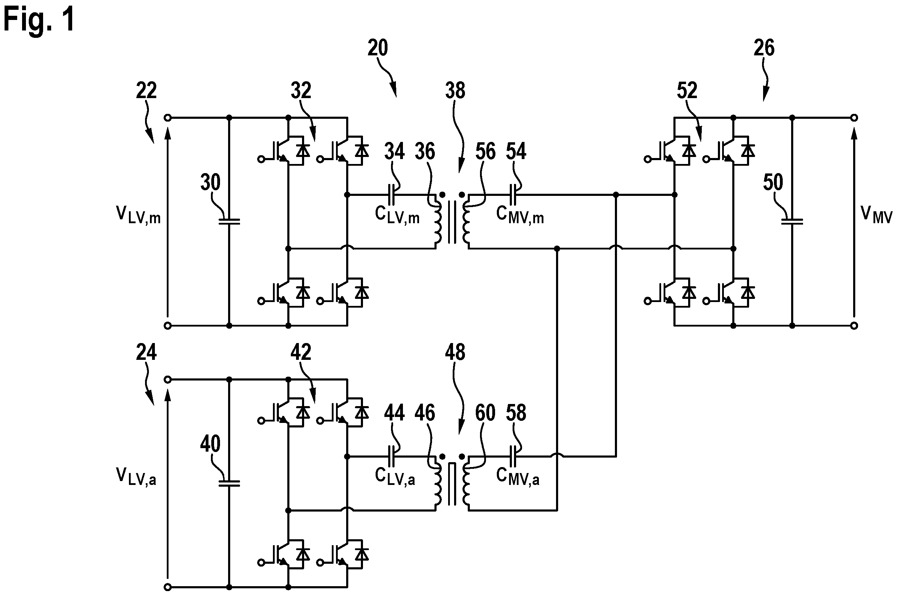

Fig. 1 shows an electric circuit diagram of an exemplary embodiment of a three-port Series Resonance Converter (SRC) 20. The three-port SRC 20 has a main feeding bridge 22, at least one auxiliary feeding bridge 24, and an output bridge 26. Optionally, the three-port SRC 20 may have more than one auxiliary feeding bridge 24.

The main feeding bridge 22 has a first DC link 30, at least two, e.g., four, first switches 32, a first capacitor input 34 and a first input coil 36. The first switches 32 each may be a semiconductor switch. Each first switch 32 may comprise a dedicated first diode which may act as a freewheeling diode. The first input capacitor 34 has a first input capacitance $C_{LV,M}$.

The auxiliary feeding bridge 24 has a second DC link 40, at least two, e.g., four, second switches 42, a second input capacitor 44 and a second input coil 46. The second switches 42 each may be a semiconductor switch. Each second switch 32 may comprise a dedicated second diode which may act as a freewheeling diode. The second input capacitor 44 has a second input capacitance $C_{LV,a}$.

The output bridge 26 has an output DC link 50, at least two, e.g., four, output switches 52, a first output capacitor 54, a second output capacitor 58, a first output inductance 56, and a second output inductance 60. The output switches 52 each may be a semiconductor switch. Each output switch 52 may comprise a dedicated output diode which may act as a freewheeling diode. The first output capacitor 54 has a first output capacitance $C_{MV,m}$. The second output capacitor 58 has a second output capacitance $C_{MV,a}$.

So, the main feeding bridge 22 and the auxiliary feeding bridge 24 each may be full-bridges having four switches 32, 42. Alternatively, the main feeding bridge 22 and the auxiliary feeding bridge 24 each may be half bridges (not shown) having two switches 32, 42 only.

The main feeding bridge 22 is electro-magnetically coupled to the output bridge 26 via the first input coil 36 of the main feeding bridge 22 and the first output inductance 56 of the output bridge 26. The first output inductance 56 may be provided by a first output coil. The first input coil 36 and the first output coil may form a first transformer 38 of the three-port SRC 20 or may be components of the first transformer 38. The auxiliary feeding bridge 24 is electro-magnetically coupled to the output bridge 26 via the second input coil 46 of the auxiliary feeding bridge 24 and the second output inductance 60 of the output bridge 26. The second output inductance 60 may be provided by a second output coil. The second input coil 46 and the second output coil may form a second transformer 48 of the three-port SRC 20 or may be components of the second transformer 48. Alternatively, the three-port SRC 20 may have only one transformer (not shown) with only one output inductance, e.g., one single output coil, wherein both of the input coils 36, 46 may be electro-magnetically coupled to the single output coil.

The three-port SRC 20 is configured for receiving a first input voltage $V_{LV,m}$ via the main feeding bridge 22, for receiving a second input voltage $V_{LV,a}$ via the auxiliary feeding bridge 24, and for generating an overall output voltage $V_{MV}$ at an output of the output bridge 26 from the input voltages $V_{LV,m}$, $V_{LV,a}$. In this context, the output bridge 26 may be used for an active rectification of an output bridge current provided by the output bridge 26.

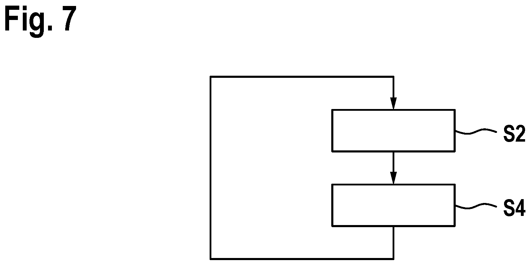

To this end, the three-port SRC 20 may be controlled by a controller (not shown) based on a predetermined control scheme. The controller has a memory (not shown) for storing one or more voltage values and/or current values, and a processor (not shown) being communicatively coupled to the memory and being configured to carry out the method as introduced in the foregoing and explained in detail with respect to figure 7 based on the stored voltage values and/or, respectively, current values. The controller may be communicatively coupled to the switches 32, 42, 52 of the bridges 22, 24, 26 and may be configured for providing one or more control signals to individually or collectively activate the switches 32, 42, 52 and for providing one or more turn off signal to individually or collectively deactivate, in other words turn off, the switches 32, 42, 52.

Basically, the three-port SRC 20 may be operated vice versa such that an overall input voltage may be provided to the output bridge 20 and that the three-port SRC 20 converts the overall input voltage into individual output voltages provided by the main feeding bridge 22 and, respectively, the auxiliary feeding bridge 24. However, in this case, a conventional method for operating a two-port SRC (not shown) may be used for this alternative power flow direction. Therefore, the present description focusses on the power flow from the feeding bridges 22, 24 to the output bridge 26.

The three-port SRC 20 and the controller being communicatively coupled to the three-port SRC 20 may form a converter arrangement or may be part of a converter arrangement.

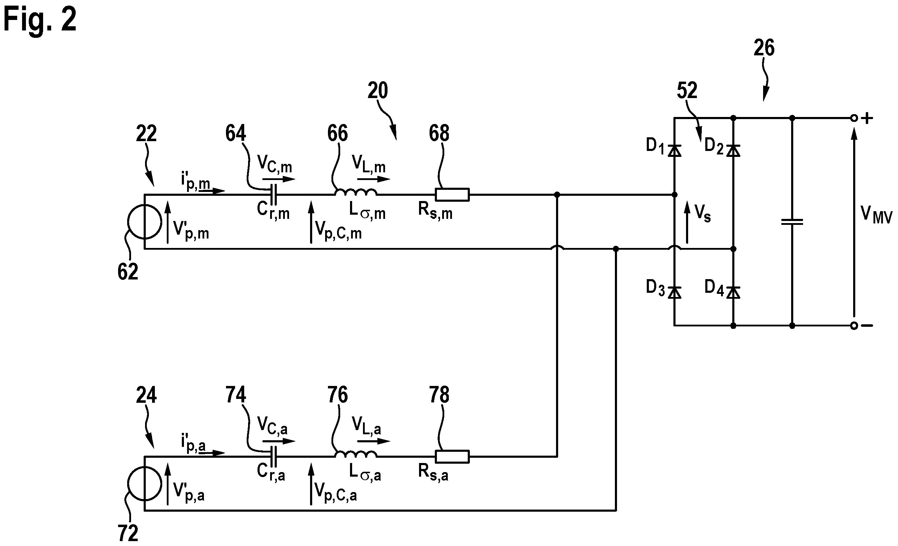

Fig. 2 shows an equivalent circuit diagram of the three-port SRC of figure 1. The first DC link 30 and the first switches 32 of the main feeding bridge 22 are represented by a first ideal voltage source 62. The second DC link 40 and the second switches 42 of the auxiliary feeding bridge 24 are represented by a second ideal voltage source 72.

The first input capacitor 34 and the first output capacitor 54 may be represented by a first substitute capacitor 64. As such, the first input capacitance $C_{LV,m}$ and the first output capacitance $C_{MV,m}$ may be summarized into a first resonance capacitance $C_{r,m}$. The second input capacitor 44 and the second output capacitor 58 may be represented by a second substitute capacitor 74. As such, the second input capacitance $C_{LV,a}$ and the second output capacitance $C_{MV,a}$ may be summarized into a second resonance capacitance $C_{r,a}$.

The first transformer 38 may be represented by a first substitute inductance 66 and may be modelled by a first leakage inductance $L_{\sigma,m}$. The second transformer 48 may be represented by a second substitute inductance 76 and may be modelled by a second leakage inductance $L_{\sigma,a}$.

A first substitute resistor 68 may represent conduction losses of the first switches 32, the first diodes, the first transformer 38, and the output switches 52 and may be neglected in the following. A second substitute resistor 78 may represent conduction losses of the second switches 42, the second diodes, the second transformer 58, and the output switches 52 and may be neglected in the following.

The output switches 52 are represented by their output diodes which are referred to by D1, D2, D3, and D4, in figure 2.

A first resonance frequency $f_{res,m}$ of the main feeding bridge 22 may be given by

$$f_{res,m} = \frac{1}{\sqrt{L_{\sigma,m} C_{r,m}}}.$$

A second resonance frequency $f_{res,a}$ of the auxiliary feeding bridge 24 may be given by

$$f_{res,a} = \frac{1}{\sqrt{L_{\sigma,a} C_{r,a}}}.$$

The leakage inductances $L_{\sigma,m}$, $L_{\sigma,a}$ and the resonance capacitances $C_{r,m}$, $C_{r,a}$ are chosen such that the first resonance frequency $\omega_m$ and the second resonance frequency $\omega_a$ are not the same, e.g., by design and/or due to component tolerances.

The first ideal voltage source 62 may provide a first output voltage $v'_{p,m}$. The first output voltage $v'_{p,m}$ may cause a first transformer current $i'_{p,m}$ which may lead to a first capacitor voltage $v_{C,m}$ over the first substitute capacitor 64, to a first primary capacitor voltage $v_{p,C,m}$ between the two parallel lines of the main feeding bridge 22, and to a first inductor voltage $v_{L,m}$ over the first substitute inductance 66. It has to be mentioned in this context, that all quantities characterized by the apostrophe " ' " are quantities scaled by the turn ratios of their respective transformers of the three-port SRC 20. In particular, in this description, the LV side quantities are scaled up to the MV quantities to enhance the calculability, as it is known in the art.

Similarly, the second ideal voltage source 72 may provide a second output voltage $v'_{p,a}$. The second output voltage $v'_{p,a}$ may cause a second transformer current $i'_{p,a}$ which may lead to a second capacitor voltage $v_{C,a}$ over the second substitute capacitor 74, to a second primary capacitor voltage $v_{p,C,a}$ between the two parallel lines of the auxiliary feeding bridge 24, and to a second inductor voltage $v_{L,a}$ over the second substitute inductance 76.

These voltages cause a resulting voltage $v_s$ in the output bridge 26. The transformer currents $i'_{p,m}$, $i'_{p,a}$ may be summed up to get the output bridge current of the three-port SRC 20. In other words, the output bridge current of the three-port SRC 20 may correspond to the sum of the transformer currents $i'_{p,m}$, $i'_{p,a}$.

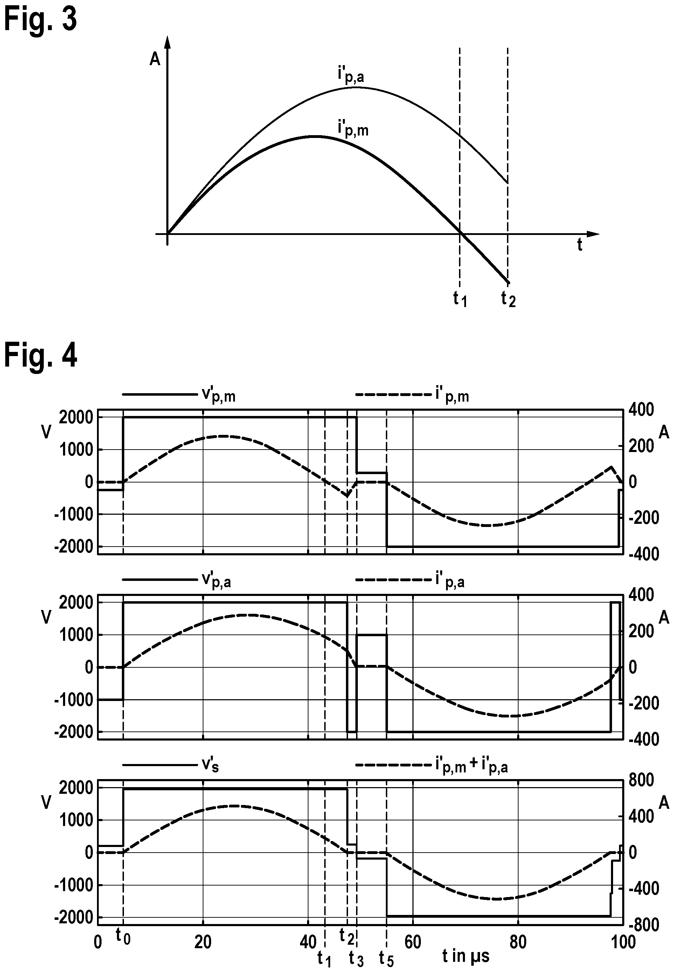

Fig. 3 shows examples of the transformer currents $i'_{p,m}$, $i'_{p,a}$ of the feeding bridges 22, 24 of the three-port SRC 20 according to figures 1 and 2, without delaying a turn on signal for turning on the corresponding feeding bridge 22, 24. So, the values shown in the diagrams of figure 3 where captured while the three-port SRC 20 was operated in accordance with the predetermined control scheme and without using the method for operating the three-port series resonance converter 20 as disclosed herein and as described with respect to figure 7.

Because the resonance frequencies are not the same as mentioned above, but deviate from each other, there is no unique zero crossing of the transformer currents $i'_{p,m}$, $i'_{p,a}$ anymore. In contrast, the transformer current $i'_{p,m}$, $i'_{p,a}$ of the feeding bridge 22, 24 featuring the higher resonance frequency reaches the zero crossing faster than the other. For example, in figure 3, the first transformer current $i'_{p,m}$ reaches zero first since it is assumed that the first resonance frequency $f_{res,m}$ is larger than the second resonance frequency $f_{res,a}$. In particular, at the end of the active interval shown in figure 3, the first transformer current $i'_{p,m}$ is at least approximately zero at a first point in time $t_1$ and the second transformer current $i'_{p,a}$ is at least approximately zero at a second point in time $t_2$ wherein the first point in time $t_1$ is before the second point in time $t_2$. At the second point in time $t_2$, a magnitude of the first transformer current $i'_{p,m}$ may be the same as a magnitude of the second transformer current $i'_{p,a}$, wherein the signs of the transformer currents $i'_{p,m}$, $i'_{p,a}$ are different with respect to each other.

As a consequence, the first transformer current $i'_{p,m}$ will start to reverse while the second transformer current $i'_{p,a}$ is still delivering power to the output bridge 26, therefore keeping the output bridge 26 forward biased, as explained with respect to figure 4.

Fig. 4 shows examples of voltage and current measurements measured at the three-port SRC 20 of figure 1. The diagrams in the first line show the first output voltage $v'_{p,m}$ and the first transformer current $i'_{p,m}$ in the main feeding bridge 22. The diagrams in the second line show the second output voltage $v'_{p,a}$ and the second transformer current $i'_{p,a}$ in the auxiliary feeding bridge 24. The diagrams in the third line show the resulting voltage $v_s$, and an output bridge current of the output bridge 26 corresponding to the sum of the transformer currents $i'_{p,m}$, $i'_{p,a}$ in the output bridge 26.

As may be seen from the diagrams in the first two lines, the transformer currents $i'_{p,m}$, $i'_{p,a}$ firstly rise up from zero at a starting time instance $t_0$ with rising edges of the corresponding output voltage $v'_{p,m}$, $v'_{p,a}$, wherein the edges of the output voltage $v'_{p,m}$, $v'_{p,a}$ mark switching operations according to a predetermined control scheme. Then, the transformer currents $i'_{p,m}$, $i'_{p,a}$ go down towards zero, wherein this phase, during which the transformer currents $i'_{p,m}$, $i'_{p,a}$ are above zero, represents a first active interval of the three-port SRC 20.

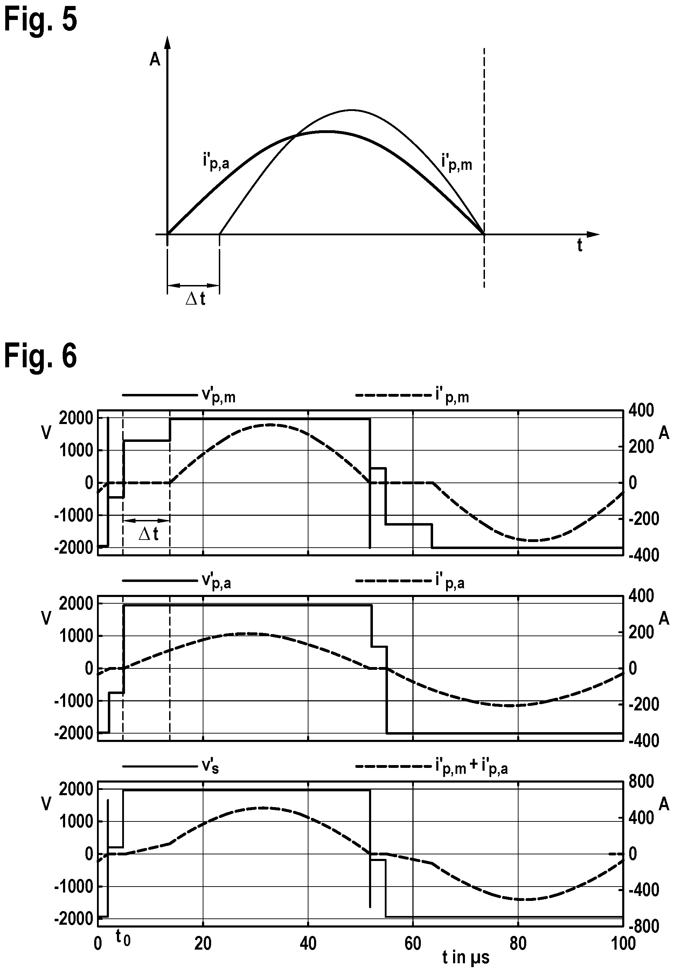

At the end of the first active interval, the transformer currents $i'_{p,m}$, $i'_{p,a}$ do not reach zero at the same time because of the deviating resonance frequencies of the feeding bridges 22, 24. In particular, the first transformer current $i'_{p,m}$ is already zero at a first time instance $t_1$ while the second transformer currents $i'_{p,a}$ is still larger than zero. In this situation, the first transformer current $i'_{p,m}$ will start to reverse, in particular at the first time instance $t_1$. The reversing first transformer current $i'_{p,m}$ then rises until its value equals the second transformer currents $i'_{p,a}$ but with opposite sign. At a second time instance $t_2$, the output bridge 26 starts to block. This reversal of the first transformer current $i'_{p,m}$ may be avoided by the method for operating the three-port SRC 20, as explained with respect to figures 5 to 7.

The next phase, during which the transformer currents $i'_{p,m}$, $i'_{p,a}$ decrease to zero and during which the output bridge 26 blocks, represents a pre-holdoff interval of the three-port SRC 20 that ends at a third time instance $t_3$. This third time instance $t_3$ marks a beginning of the holdoff time. The time interval between the second and third time instances $t_2$, $t_3$ may be referred to as "pre-holdoff time" in the following. In order to eliminate a coupling between the two feeding bridges 22, 24 during the holdoff interval it may be ensured that the inductor voltages $v_{L,m}$, $v_{L,a}$ stay zero during the holdoff interval, as described in the above mentioned not yet published patent application EP 24 217 330.0. In particular, since the resulting voltage $v_s$ of the output bridge 26 cannot float independently for the two feeding bridges 22, 24, this may be accomplished by enabling at least one of the AC outputs of the actively switched feeding bridges 22, 24 on the LV side to float during the holdoff time which ends at a fifth time instance $t_5$. For example, this may be achieved by turning off all four switches of one (or both) of the feeding bridges 22, 24 once the three-port SRC 20 enters the pre-holdoff interval. Once the transformer currents $i'_{p,m}$, $i'_{p,a}$ reached approximately zero, they stay approximately zero due to the absence of a close current path in this situation until a new switching cycle is initiated with a new switching action of one or both of the active bridges.

However, it is advantageous in this case to guarantee that both transformer currents $i'_{p,m}$, $i'_{p,a}$ are zero or at least approximately zero at the same time. This may be achieved by delaying a turn on signal for turning on the faster one of the feeding bridges 22, 24, in other words by delaying an entry into the active phase, as explained with respect to figures 5 and 6.

After the holdoff interval a second active interval starts during which the transformer currents $i'_{p,m}$, $i'_{p,a}$ are below zero, wherein the same problem arises at the end of the second active interval as for the first active interval, as described above.

Fig. 5 shows examples of the transformer currents $i'_{p,m}$, $i'_{p,a}$ of feeding bridges 22, 24 of the three-port SRC 20 according to figures 1 and 2, with delaying the turn on signal for turning on the faster feeding bridge 22, 24, which is the main feeding bridge 22 in the present example, for a delay time $\Delta t$. As may be seen from figure 5, both transformer currents $i'_{p,m}$, $i'_{p,a}$ are zero or at least approximately zero at the end of the first active interval, and the holdoff interval, in particular the transformer currents $i'_{p,m}$, $i'_{p,a}$ being zero or at least approximately zero during the holdoff interval, can be guaranteed.

Fig. 6 shows examples of voltage and current measurements measured at the three-port SRC 20 of figure 1, with delaying the turn on signal for the (faster) main feeding bridge 22, 24, in particular for the delay time $\Delta t$. As may be seen from figure 6, both transformer currents $i'_{p,m}$, $i'_{p,a}$ reach zero or at least approximately zero at the same time. Now, the holdoff interval can be guaranteed, e.g., by turning off at least one of the feeding bridges 22, 24.

After the holdoff interval, the second active phase is entered, wherein the turn on signal for the faster feeding bridge, i.e., the main feeding bridge 22 in the present example, and thereby the first transformer current $i'_{p,m}$, is delayed again to guarantee the next holdoff interval.

Fig. 7 shows a flow diagram of an exemplary embodiment of a method for controlling the three-port SRC 20 of figure 1.

In a step S2, the delay time $\Delta t$ may be determined. The delay time $\Delta t$ may be determined by

$$\Delta t = \left| \frac{1}{2f_{res,m}} - \frac{1}{2f_{res,a}} \right|$$

In a step S4, one or more control signals may be sent to one or more switches 32, 42 of the feeding bridges 22, 24 based on a predetermined control scheme such that the input voltages $V_{Lv,m}$, $V_{LV,a}$ applied to the feeding bridges 22, 24 are transformed to the output bridge voltage to be provided by the output bridge 26, wherein the turn on signals for the faster feeding bridge, e.g., the main feeding bridge 22, are delayed for the determined delay time $\Delta t$ at the beginning of the active intervals. This step may be carried out continuously while operating the three-port SRC 20. The predetermined control scheme may be based on Pulse Width Modulation (PWM) or on Model Predictive Control (MPC), for example.

Optionally, the turn off signal may be sent to at least some of the switches 32, 42 of at least one of the feeding bridges 22, 24 during the holdoff intervals such that the output voltage $v'_{p,m}$, $v'_{p,a}$ of the corresponding feeding bridge 22, 24 is floating to guarantee the transformer currents $i'_{p,m}$, $i'_{p,a}$ being zero or at least approximately zero during the holdoff intervals.

The method for controlling the three-port SRC 20 may be embodied as a computer program for operating the three-port SRC 20. The computer program has computer-readable instructions which, when being executed by the processor of the controller for controlling the three-port SRC 20 carry out the method for controlling the three-port SRC 20 as described in the foregoing. The computer program may be stored on a computer-readable medium. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| Three-port series resonance converter | 20 |
| Main feeding bridge | 22 |
| Auxiliary feeding bridge | 24 |
| Output bridge | 26 |
| First DC link | 30 |
| First switches | 32 |
| First capacitor | 34 |
| First input coil | 36 |
| First transformer | 38 |
| Second DC link | 40 |
| Second switches | 42 |
| Second capacitor | 44 |
| Second input coil | 46 |
| Second transformer | 48 |
| Output DC link | 50 |
| Output switches | 52 |
| First output capacitor | 54 |
| First output inductance | 56 |
| Second output capacitor | 58 |
| Second output inductance | 60 |
| First ideal voltage source | 62 |
| First substitute capacitor | 64 |
| First substitute inductance | 66 |
| First substitute resistor | 68 |
| Second ideal voltage source | 72 |
| Second substitute capacitor | 74 |
| Second substitute inductance | 76 |
| Second substitute resistor | 78 |
| First to fourth diodes | $D_1, D_2, D_3, D_4$ |
| First input voltage | $V_{Lv,m}$ |
| Second input voltage | $V_{LV,a}$ |
| Overall output voltage | $V_{MV}$ |
| First input capacitance | $C_{LV,m}$ |
| Second input capacitance | $C_{LV,a}$ |
| First output capacitance | $C_{MV,m}$ |
| Second output capacitance | $C_{MV,a}$ |
| First leakage inductance | $L_{\sigma,m}$ |
| Second leakage inductance | $L_{\sigma,a}$ |
| First resonance capacitance | $C_{r,m}$ |
| Second resonance capacitance | $C_{r,a}$ |
| First resistance | $R_{s,m}$ |
| Second resistance | $R_{s,a}$ |
| First output voltage | $v'_{p,m}$ |
| Second output voltage | $v'_{p,a}$ |
| First transformer current | $i'_{p,m}$ |
| Second transformer current | $i'_{p,a}$ |
| First capacitor voltage | $v_{C,m}$ |
| Second capacitor voltage | $v_{C,a}$ |
| First primary capacitor voltage | $v_{p,C,m}$ |

(continued)

| Second primary capacitor voltage | $v_{p,C,a}$ |
| First inductor voltage | $v_{L,m},$ |
| Second inductor voltage | $v_{L,a}$ |
| Resulting voltage | $v_s$ |
| Steps two to four | S2 - S4 |

## Claims

1. A method for operating a three-port series resonance converter (20), the three-port series resonance converter (20) having a main feeding bridge (22), at least one auxiliary feeding bridge (24), and an output bridge (26), wherein the main feeding bridge (22) is electro-magnetically coupled to the output bridge (26) via a first input coil (36) of the main feeding bridge (22), and the auxiliary feeding bridge (24) is electro-magnetically coupled to the output bridge (26) via a second input coil (46) of the auxiliary feeding bridge (24), the method comprising:

   - sending one or more control signals to one or more switches (32, 42) of the feeding bridges (22, 24) based on a predetermined control scheme such that input voltages ($V_{LV,m}$, $V_{LV,a}$) applied to the feeding bridges (22, 24) are transformed to an overall output voltage ($V_{MV}$) to be provided by the output bridge (26); and
   - delaying a turn on signal for activating one of the feeding bridges (22, 24) such that transformer currents ($i'_{p,m}$, $i'_{p,a}$) of the feeding bridges (22, 24) reach at least approximately zero at least approximately at the same time.

2. The method according to claim 1, comprising:
   determining a delay time ($\Delta t$) which is needed for delaying the turn on signal such that transformer currents ($i'_{p,m}$, $i'_{p,a}$) of the feeding bridges (22, 24) are at least approximately zero at least approximately at the same time, wherein the turn on signal is delayed for the determined delay time ($\Delta t$).

3. The method according to claim 2, comprising:
   determining resonance frequencies of the feeding bridges (22, 24), wherein the delay time ($\Delta t$) is determined from the determined resonance frequencies.

4. The method according to claim 3, wherein
   the delay time ($\Delta t$) is determined by

$$\Delta t = \left| \frac{1}{2f_{res,m}} - \frac{1}{2f_{res,a}} \right|$$

5. The method according to one of claims 3 or 4, wherein
   the turn on signal of the feeding bridge (22, 24) which has the higher resonance frequency is delayed for the delay time ($\Delta t$).

6. A controller for operating a three-port series resonance converter (20), the controller comprising:

   a memory for storing one or more voltage values and/or current values; and
   a processor being communicatively coupled to the memory and being configured to carry out the method in accordance with one of the preceding claims based on the stored voltage values and/or, respectively, current values.

7. A converter arrangement, comprising:

   a three-port series resonance converter (20); and
   a controller according to claim 6, being communicatively coupled to the three-port series resonance converter (20) and being configured for operating the three-port series resonance converter (20).

8. A computer program for operating a three-port series resonance converter (20), the computer program comprising computer-readable instructions which, when being executed by the processor of the controller according to claim 7, carry out the method in accordance with one of claims 1 to 6.

9. A computer-readable medium on which a computer program according to claim 9 is stored.

# Fig. 1

# Fig. 2

# Fig. 3

# Fig. 4

# Fig. 5

# Fig. 6

# Fig. 7

Europäisches
Patentamt
European
Patent Office
Office européen
des brevets

# EUROPEAN SEARCH REPORT

**Application Number**

EP 24 21 9446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG KAIXUAN ET AL: "Topology-Level Power Decoupling Three-Port Isolated Current-Fed Resonant DC-DC Converter", IEEE TRANSACTIONS ON INDUSTRIAL ELECTRONICS, IEEE SERVICE CENTER, PISCATAWAY, NJ, USA, vol. 69, no. 5, 25 May 2021 (2021-05-25), pages 4859-4868, XP011897475, ISSN: 0278-0046, DOI: 10.1109/TIE.2021.3082066 [retrieved on 2022-01-07] * the whole document * | 1-9 | INV. H02M1/00 H02M1/12 H02M3/00 H02M3/335 |
| A | TRAN YAN-KIM ET AL: "Multiport resonant DC-DC converter", IECON 2015 - 41ST ANNUAL CONFERENCE OF THE IEEE INDUSTRIAL ELECTRONICS SOCIETY, IEEE, 9 November 2015 (2015-11-09), pages 3839-3844, XP032855834, DOI: 10.1109/IECON.2015.7392699 [retrieved on 2016-01-25] * the whole document * | 1-9 | |

**TECHNICAL FIELDS SEARCHED (IPC)**

H02M

The present search report has been drawn up for all claims

| Place of search | Date of completion of the search | Examiner |
|---|---|---|
| The Hague | 27 April 2025 | Van der Meer, Paul |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24217330 A